(19) Europäisches Patentamt
European Patent Office
Office européen des brevets

(11) **EP 3 147 185 A1**

(12) **EUROPEAN PATENT APPLICATION**

(43) Date of publication:
**29.03.2017 Bulletin 2017/13**

(51) Int Cl.:
***B62D 35/00*** *(2006.01)*

(21) Application number: **16190605.2**

(22) Date of filing: **26.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.09.2015 GB 201516920**

(71) Applicant: **Nissan Motor Manufacturing (UK) Ltd.**
**Cranfield**
**Bedfordshire MK43 0DB (GB)**

(72) Inventors:
• **KREMHELLER, Andreas**
  **Bedford, MK430DB (GB)**
• **MOORE, Magnus**
  **Bedford, Bedfordshire MK430DB (GB)**
• **LE GOOD, Geoff**
  **Northwich, Cheshire CW9 8WD (GB)**
• **ANNETTS, Ivor**
  **Brackley, Northamptonshire NN13 7UG (GB)**

(54) **AERODYNAMIC VEHICLE STRUCTURE**

(57) The present invention provides a front end structure for a vehicle. The front end structure comprises an upper portion including a windscreen portion; a lower portion located below the upper portion, the lower portion including a hood portion; an upstanding portion between the upper portion and the lower portion, wherein the height of the upstanding potion has a height that is 20% to 30% of the height of the upper portion.

FIG. 5(a)

EP 3 147 185 A1

**Description**

TECHNICAL FIELD

The present disclosure relates to an aerodynamic vehicle structure and particularly, but not exclusively, to an aerodynamic front end structure for a vehicle, in particular a light commercial vehicle.

BACKGROUND

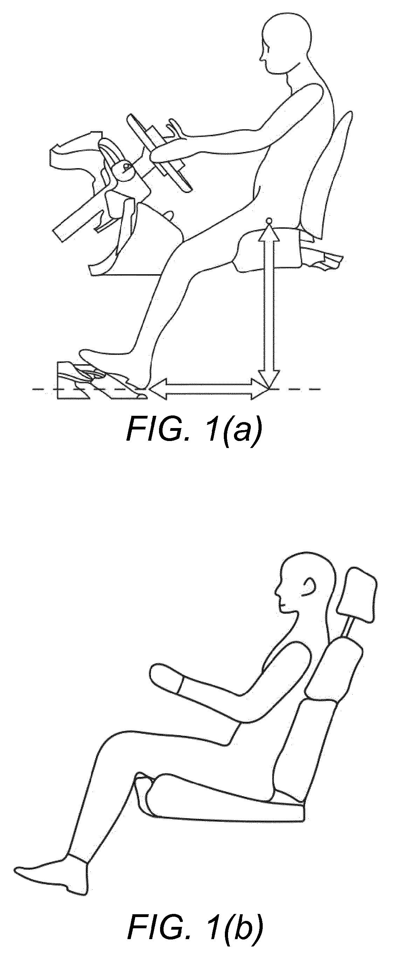

Light commercial vehicles (LCVs), also referred to as light goods vehicles, typically have tall cabins to provide the driver with good visibility and seating position, e.g. upright driving positions. For example, the driver may have an upright driving position (as shown in Figure 1(a)) that is more upright compared to driving positions (as shown in Figure 1(b)) found in regular vehicles including LCVs. However, tall cabins increase the frontal area of LCVs which increases the aerodynamic drag force on the vehicle. Drag force may be expressed by the drag equation as is known in the art:

$$F_D = \tfrac{1}{2} \times \rho \times A \times v^2 \times C_D$$

where:

 ρ is the air density;
 A is the frontal area of the vehicle;
 v is the vehicle velocity relative to the air; and
 $C_D$ is the drag coefficient of the vehicle.

Accordingly, for a given frontal area, vehicle velocity and air density, the drag force on the vehicle may be reduced by reducing the drag coefficient of the vehicle. It is desirable to improve aerodynamic performance of an LCV and thus improve fuel efficiency and lower operating costs of such vehicles.

The aerodynamic performance, specifically the drag coefficient of LCVs is affected by the pressure drag on the vehicle which is dominated by two main features: the magnitude of the pressure exerted on the front of the vehicle, and the separated flow regime emanating from the base area of the vehicle due to the interaction with the base flow wake. Additionally, airflow over the top of the vehicle can adversely affect performance in the case of flow separation and the presence of an adverse pressure gradient.

Aerodynamic devices may be added to LCVs, for example cabin mounted deflectors or added bodywork on top of a cabin, which can improve streamlining and reduce the drag coefficient. However, such solutions may not always be practical, for example, where the added space required by the additional body work/deflectors is required for cargo space and/or cabin headroom space.

Roof slope shape has significant effect on vehicle aerodynamics for high cabin heights. For example, WO2008125863 discusses a trailer for a heavy goods vehicle with a cambered roof profile. However, such profiles still result in significant rear wake while deepening the camber restricts cargo space and also the size of cargo doors needed to access the cargo space.

Typically, on sedan (also known as saloon) vehicles, the drag coefficent can be reduced by application of camber to the roof in the longitudinal direction and maintaining sufficiently large bend radii with corresponding small pressure gradients so as to avoid flow separation. For LCVs which have an abrupt end of the roof line, the slope will influence the angles and direction of the wake generated behind the vehicle. For LCVs it is often not practical create beneficial aerodynamic features such as long, rounded forebodies; in particular if the LCV profile has a tall cabin with steep windshield and hood angles.

However, such profiles still result in significant rear wake while deepening the camber restricts cargo space and also the size of cargo doors needed to access the cargo space.

Edges on front end vehicle structures (such as front grilles, headlights or the hood) can cause undesirable effects, e.g. at the hood edge. The front end of tall vehicles such as LCVs can have a significant effect on the drag coefficient of the vehicle. Front spoilers (i.e. air dams and splitters) can be attached to improve airflow and reduce drag, but can be impractical to deploy on LCVs as they restrict ground clearance and hamper accessibility.

It desirable to improve aerodynamic efficiency of LCVs while preserving cabin headroom space and/or cargo space. The present invention has been devised to mitigate or overcome at least some of the above-mentioned problems.

SUMMARY OF THE INVENTION

According to an aspect of the present invention there is provided a commercial vehicle comprising a front end structure, wherein the front end structure comprises: an upper portion including a windscreen portion; a lower portion located below the upper portion, the lower portion including a hood portion; and an upstanding portion between the upper portion and the lower portion, wherein the height of the upstanding potion has a height that is 20% to 30% of the height of the upper portion. The windscreen portion is inclined at substantially the same inclination as the hood portion at the point where the hood portion and the windscreen portion intersect the upstanding portion. The angle of inclination of the windscreen and hood portions is approximately 45 degrees.

The front end structure improves the aerodynamics of the vehicle which may have a raised cabin and corresponding increased frontal area, for example, as a result of an upright driving position. Accordingly, the fuel efficiency of the vehicle can be improved for the vehicle. Further, a cargo area of the vehicle may be increased due to the increased vehicle height behind the cabin.

In particular, the upstanding portion accelerates airflow around the front corners of the front end structure (and hence the front of the vehicle) and generates thrust. This mechanism enhances the momentum of the flow and increases base pressure, a key requirement for drag reduction.

In some example configurations of the front end structure, the drag coefficient can be reduced by 0.003 compared to an equivalent front end structure without the upstanding portion.

Optionally, the height of the upper portion is 70% to 90% of the height of the lower portion.

Optionally, the upstanding potion is substantially vertical. Alternatively, a lower edge of the upstanding portion may be further rearwards that an upper edge of the upstanding portion.

Optionally, the upstanding portion extends across the width of the vehicle. The upstanding portion may extend around the sides of the vehicle below the front side windows. An advantage of this is to minimise trailing vortex generation from the upstanding portion. As a result, airflow is more streamlined on the vehicle sides with the velocity vector being in parallel to the vehicle body side.

Optionally, the upstanding portion comprises vehicle headlights.

Optionally, the upstanding portion comprises a grille. Additionally or alternatively, the lower portion comprises a grille.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

BRIEF DESCRIPTION OF THE DRAWINGS

Figures 1(a) and 1(b) have already been described above by way of background, in which:

Figure 1(a) is a schematic side view of an upright driving position; and

Figure 1(b) is a schematic side view of a conventional driving position.

One or more embodiments of the invention will now be described, by way of example only, with reference to the remaining drawings, in which:

Figure 2(a) is a front oblique view of a vehicle according to an embodiment of the present invention;

Figure 2(b) is a rear oblique view of the vehicle of Figure 2(a);

Figure 2(c) is a side view of the vehicle of Figure 2(a);

Figure 2(d) is a top view of the vehicle of Figure 2(a);

Figure 2(e) is a front view of the vehicle of Figure 2(a);

Figure 2(f) is a rear view of the vehicle of Figure 2(a);

Figure 3 is a side view of a vehicle according to another embodiment of the present invention;

Figure 4 is a side view of a vehicle according to another embodiment of the present invention;

Figure 5(a) is a front oblique view of a vehicle according to another embodiment of the present invention;

Figure 5(b) is a rear oblique view of the vehicle of Figure 5(a); and

Figure 5(c) is a side view of the vehicle of Figure 5(a).

DETAILED DESCRIPTION

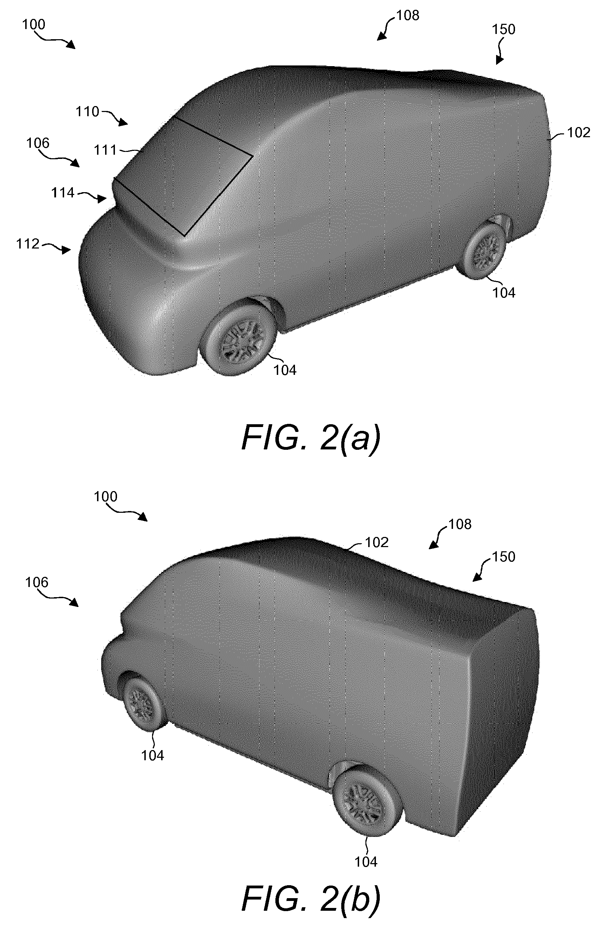

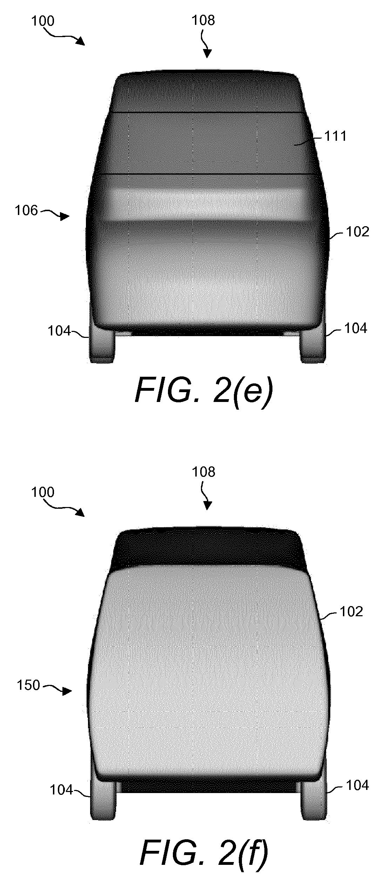

Figures 2(a) to 2(f) show different views of a vehicle 100 according to an embodiment of the present invention. The vehicle 100 is a Light Commercial Vehicle (LCV) and comprises a body 102 and four wheels 104. The body 102 includes a front end structure 106 and a roof structure 108. A cabin of the vehicle may be arranged for occupants to be seated in an upright position, for example as shown in Figure 1(a).

The front end structure 106 comprises a windscreen portion 110, a hood portion 112 and an upstanding portion 114. A vehicle windscreen 111 is located in the windscreen portion 110, enabling vehicle occupants to see outside. A vehicle hood (i.e. bonnet) and grille (not shown) are located in the hood portion 112, which allow access to an engine bay and provide an air intake, respectively.

The upstanding portion 114 is arranged between the windscreen portion 110 and the hood portion 112 such that the upstanding portion 114 creates a substantially vertical step from the hood portion 114 up to the windscreen portion 110. The upstanding portion 114 is substantially perpendicular to the forwards direction of the vehicle 100 and extends across the front end structure 106.

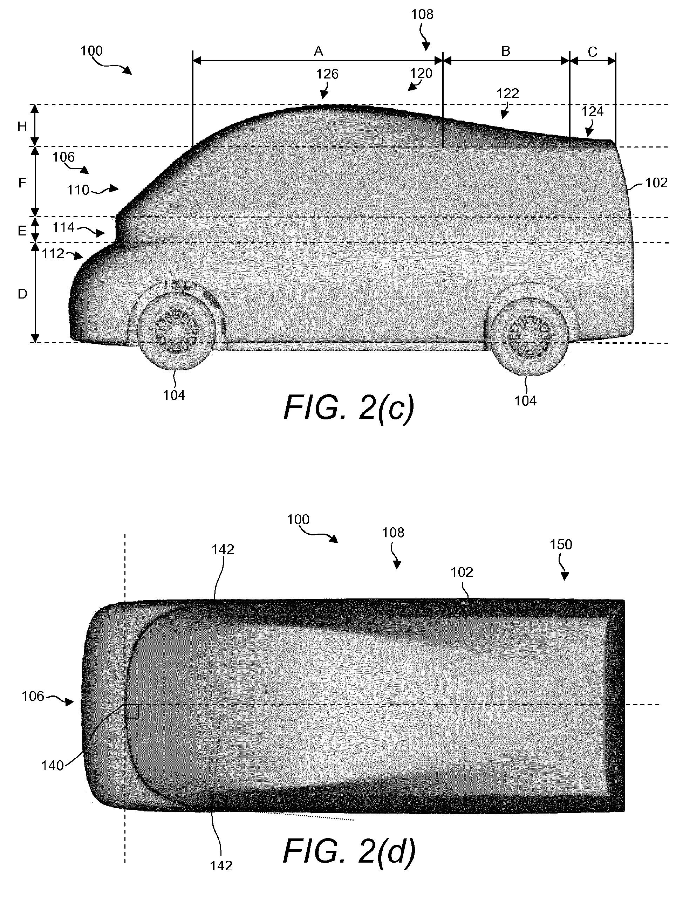

Figure 2(d) shows a top view of the vehicle 100 showing the upstanding portion 114 blends smoothly around to the sides of the vehicle 100. A front apex 140 of the upstanding portion 114 is tangential to a front of the vehicle body 102, where the front of the vehicle body 102 is substantially perpendicular to the forward direction of travel of the vehicle 100. From the front apex 140, the upstanding portion curves smoothly outwards and rearwards in both directions to define side corners 142 which are each tangential to the sides of the vehicle body 102, where the sides of the vehicle body 102 are substantially in the forward direction of travel of the vehicle 100.

The shape of the upstanding portion 114 around the sides of the body 102 acts to minimise the size of any vortices that may be generated from the upstanding portion 114. Reducing the size of the vortices has the benefit of reducing the drag on the vehicle 100.

The roof structure 108 comprises a convex portion 120, a concave portion 122 and a substantially flat portion 124. The convex portion 120 extends in a rearward direction from the top of the windscreen portion 110.

The concave portion 122 is located rearwards of the convex portion 120 and the substantially flat portion 124 located rearwards of the concave portion 120 to the rear edge of the vehicle 100. In other words, the roof structure 108 has a reflex camber profile.

Around the middle of the concave portion 120 in a rearward direction, the concave portion 120 reaches a maximum height location 126. The maximum height location 126 is substantially over a passenger cabin of the vehicle 100 where a driver of the vehicle is located. The convex portion 120 and the substantially flat portion 124 form the part of the roof structure over a rear portion 150 of the vehicle 100. For example, the rear portion 150 may comprise a cargo area of the LCV.

The sides of the vehicle 100 in the rear portion 150 taper towards the roof structure 108 such that the width of the vehicle reduces towards the roof structure. The tapered sides and the reflex camber profile of the roof structure 108 each act to reduce the rear area of the body 102 to decrease the size of the airflow wake.

Figure 2(c) shows a side view of the vehicle 100. In particular, regarding the roof structure 108, the convex portion 120 is shown labelled as region A, the concave portion 122 is shown labelled as region B and the substantially flat portion 124 is shown labelled as region C. Regarding the front end structure 106, the hood portion 112 is shown labelled as region D (i.e. from the bottom of the body 102 to bottom of the upstanding portion 114), the upstanding portion 114 is shown labelled as region E, and the windscreen portion 110 is shown labelled as region F. The maximum height of the roof structure 108, between the top of the windscreen portion 110 to the maximum height location 126 is shown labelled as region H.

The region A of the convex portion 120 has a length that is approximately 50% of the total length of the roof structure 108 (i.e. the total length of region A, region B and region C added together). The region B of the concave portion 122 has a length that is approximately 30% of the total length of the roof structure 108. The region C of the substantially flat portion 124 has a length that is approximately 10% of the total length of the roof structure 108.

In other embodiments, the region A of the convex portion 120 may have a length that is approximately 40% to 50% of the total length of the roof structure 108, the region B of the concave portion 122 may have a length that is approximately 30% to 50% of the total length of the roof structure 108, and the region C of the substantially flat portion 124 may have a length that is approximately 10% to 20% of the total length of the roof structure 108.

The maximum height location 126 of the convex portion 120 provides a tall vehicle cabin to provide the driver with good visibility and seating position. Rearwards of the maximum height location 126, the shape of the convex portion 120 acts to keep the boundary layer of the airflow over the roof structure 108 attached. This prevents turbulence which would increase drag on the vehicle 100 when the vehicle is in motion. The concave portion 122 and the substantially flat portion 124 also act to keep the boundary layer attached over the roof structure 108. The shape of the substantially flat portion 124 reduces the size of the airflow wake behind the vehicle 100 to reduce the drag when the vehicle 100 is in motion.

The region D of the hood portion 112 has a height that is approximately 40% of the total height of the body 102 (i.e. the total length of region D, region E, region F and region H added together). The region E of the upstanding portion 114 has a height that is approximately 30% of the height of region F of the windscreen portion 110, and approximately 10% of the total height of the body 102. The region F of the windscreen portion 110 has a height that is approximately 30% of the total height of the body 102. The region H has a height that is approximately 20% of the total height of the body 102.

In other embodiments, the region D of the hood portion 112 may have a height that is approximately 30% to 50% of the total height of the body 102, the region E of the upstanding portion 114 may have a height that is approximately 5% to 20% of the total height of the body 102, the region F of the windscreen portion 110 may have a height that is approximately 20% to 40% of the total height of the body 102, and the region H may have a height that is approximately 5% to 30% of the total height of the body 102.

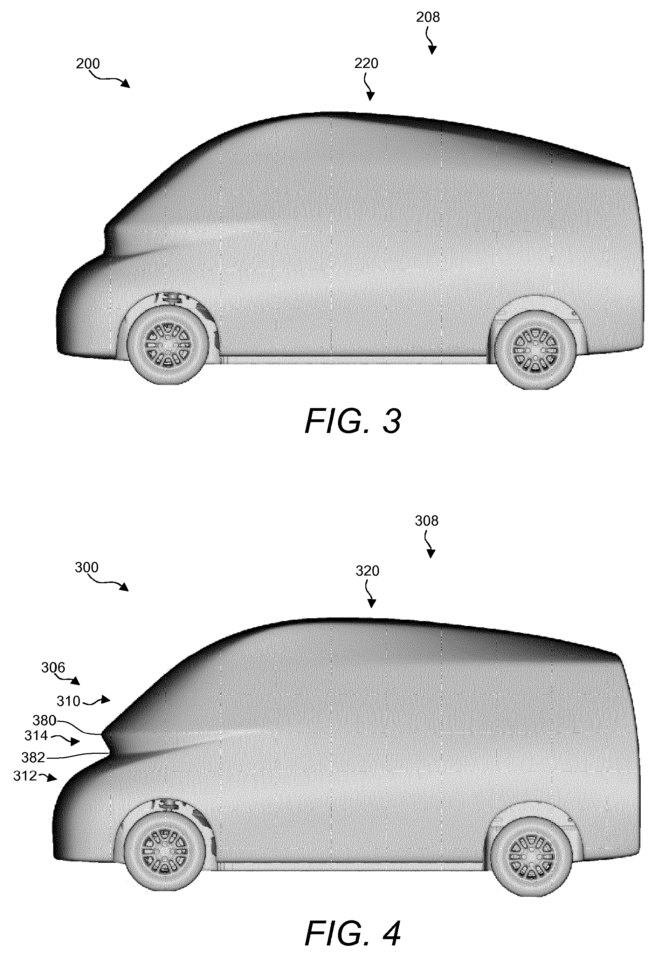

Figure 3 shows a side view of a vehicle 200 according to an embodiment of the present invention. The vehicle 200 is substantially the same as the vehicle 100, and comprises a roof structure 208 having a convex portion 220. In particular, the vehicle 200 of this embodiment does not comprise a concave portion or a substantially flat portion compared to the vehicle 100. Instead, the convex portion 220 simply declines continuously towards the rear of the vehicle body. The arrangement of the roof structure 208 acts to keep the boundary layer of the airflow attached when the vehicle 200 is in motion, in order to reduce the drag.

Figure 4 shows a side view of a vehicle 300 according to an embodiment of the present invention. The vehicle 300 is substantially the same as the vehicle 100, and comprises a front end structure 306 and a roof structure 308. The roof structure 308 includes a convex portion 320. In particular, the vehicle 300 of this embodiment does not comprise a concave portion or a substantially flat portion compared to the vehicle 100. The front end structure 306 comprises a windscreen portion 310, a hood portion 312 and an upstanding portion 314. The windscreen portion 310 and the hood portion 312 are substantially the same as of the vehicle 100. The upstanding portion 314 has an upper edge 380 and a lower edge 382. In the vehicle 300, the lower edge 382 is further rearward than the upper edge 380, having an angle of approximately 10 to 20 degrees forward from the vertical.

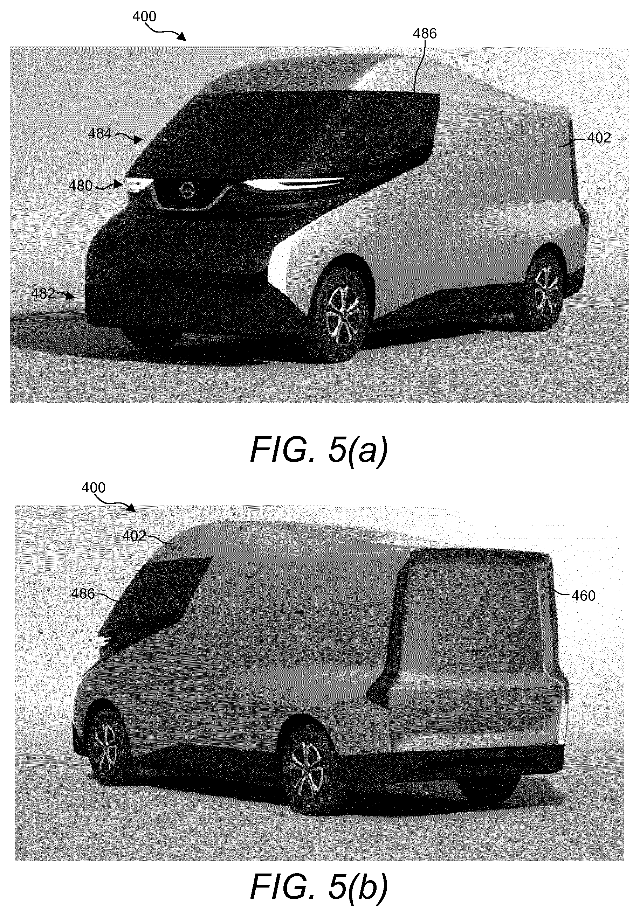

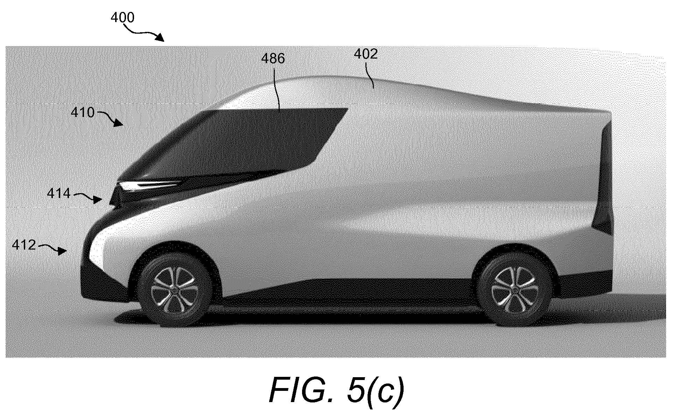

Figures 5(a) to 5(c) show different views of a vehicle 400 according to an embodiment of the present invention. The vehicle 400 is substantially the same as the vehicle 100, although the outer surface of the vehicle 400 is shown with more detail such as headlights 480, a central front grille 482, a front windscreen 484 and side windows 486. The front windscreen 484 is located in a windscreen portion 410, the central front grille 482 is located in a hood portion 412, and the headlights are located in an upstanding portion 414.

The vehicle 400 comprises a body 402 comprising flanges 460 at the rear edge across the top and sides of the body 402. The flanges 460 act to extend the effective length of the vehicle 400 and reduce the effective rear area of the body 402 to reduce the size of the turbulent wake behind the vehicle compared to an equivalent vehicle without the flanges 460.

In the vehicle 400, the upstanding portion 414 blends around the sides of the body 402 to define a crease that extends rearwardly and upwardly below each side window 486. Upper and lower edges of the crease taper together rearwardly.

Many modifications may be made to the above examples without departing from the scope of the present invention as defined in the accompanying claims.

## Claims

1. A light commercial vehicle (100) comprising a front end structure (106), wherein the front end structure comprises:

   an upper portion including a windscreen portion (110);
   a lower portion located below the upper portion, the lower portion including a hood portion (112);
   **Characterised in that** there is provided an upstanding portion (114) between the upper portion and the lower portion, wherein the height of the upstanding portion has a height that is 20% to 30% of the height of the upper portion; wherein the windscreen portion (110) is inclined at substantially the same inclination as the hood portion (112) at the respective points where the windscreen portion and the hood portion intersect the upstanding portion; and wherein the angle of inclination is approximately 45 degrees.

2. The front end structure (106) of any preceding claim, wherein the height of the upper portion is 70% to 90% of the height of the lower portion.

3. The front end structure (106) of any preceding claim, wherein the upstanding potion (114) is substantially vertical.

4. The front end structure (106) of claims 1 or 2, wherein a lower edge (382) of the upstanding portion (114) is further rearwards that an upper edge (380) of the upstanding portion.

5. The front end structure (106) of any preceding claim, wherein the upstanding portion (114) extends across the width of the vehicle (100).

6. The front end structure (106) of claim 5, wherein the upstanding portion (114) extends around the sides of the vehicle (100) below the front side windows.

7. The front end structure (106) of any preceding claim, wherein the upstanding portion (114) comprises vehicle headlights (480).

8. The front end structure (106) of any preceding claim, wherein the upstanding portion comprises a grille (482).

FIG. 1(a)

FIG. 1(b)

## FIG. 2(a)

## FIG. 2(b)

FIG. 2(c)

FIG. 2(d)

FIG. 2(e)

FIG. 2(f)

FIG. 3

FIG. 4

FIG. 5(a)

FIG. 5(b)

FIG. 5(c)

Europäisches
Patentamt

European
Patent Office

Office européen
des brevets

# EUROPEAN SEARCH REPORT

Application Number

EP 16 19 0605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 44 953 A1 (HYMER IDC GMBH & CO KG [DE]) 22 March 2001 (2001-03-22) * column 4, line 6 - line 18; figure 1 * ----- | 1-8 | INV. B62D35/00 |
| A | FR 2 102 587 A5 (PEUGEOT & RENAULT) 7 April 1972 (1972-04-07) * page 2, line 9 - line 32; figures 1,2 * ----- | 1-8 | |

TECHNICAL FIELDS
SEARCHED (IPC)

B62D

The present search report has been drawn up for all claims

| Place of search | Date of completion of the search | Examiner |
|---|---|---|
| The Hague | 6 February 2017 | Burley, James |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 0605

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2017

| Patent document cited in search report | | Publication date | Patent family member(s) | Publication date |
|---|---|---|---|---|
| DE 19944953 | A1 | 22-03-2001 | NONE | |
| FR 2102587 | A5 | 07-04-1972 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008125863 A